# FASCICULE DE BREVET EUROPEEN

(11) **EP 2 339 392 B1**
(45) Date de publication et mention de la délivrance du brevet: **20.02.2019**
(21) Numéro de dépôt: 10014240.5
(22) Date de dépôt: 03.11.2010
(51) Int. Cl.: G02B 27/01, B60K 35/00

(54) **Dispositif d'affichage, notamment pour véhicule automobile**
Anzeigevorrichtung, insbesondere für Kraftfahrzeug
Display device, in particular for an automobile

(30) Priorité: 10.11.2009 DE 102009053025
(43) Date de publication de la demande: 29.06.2011
(73) Titulaire: Visteon Global Technologies, Inc., Van Buren Township, MI 48111 (US)
(72) Inventeur: Box, Benoit, 95620 Parmain (FR); Croy, Jean-Luc, 94450 Limeil Brevannes (FR); Hervy, Sebastien, 92250 La Garenne Colombes (FR); Bascoul, Pierre, 95000 Cergy (FR); Fedorawiez, Philippe, 78510 Triel sur Seine (FR); Pitte, Giany, 95520 Osny (FR); Luneau, Olivier, 95430 Auvers sur Oise (FR); Prigent, Georges, 72000 Le Mans (FR); Choquart, Pascal, 95800 Cergy Saint Christophe (FR)
(74) Mandataire: Schwöbel, Thilo K.

(56) Documents cités:
- WO-A1-98/20380
- FR-A1- 2 681 702
- JP-A- 2007 182 132
- US-A1- 2005 024 490
- US-A1- 2005 259 034

## Description

La présente invention concerne un dispositif d'affichage, notamment pour véhicule automobile.

Des dispositifs d'affichage de type à vision tête haute (HUD, head up display) sont connus, notamment avec la projection d'une image vers un pare brise comme décrit dans le document US 5214413 ou vers un élément de réflexion.

Les dispositifs d'affichage à vision à tête haute permettent de projeter une information dans le champ de vision de l'espace devant le véhicule automobile afin que le conducteur du véhicule automobile puisse lire cette information sans quitter des yeux l'espace devant le véhicule automobile. En même temps, l'information peut être lue sans modification de l'accommodation des yeux du conducteur du véhicule.

Il est avantageux que - suivant les besoins ou les goûts d'un utilisateur du véhicule - l'élément de réflexion peut soit être utilisé soit être dans un état de repos.

Un inconvénient de tels dispositifs selon l'art connu consiste dans le fait que le changement de position de l'élément de réflexion et d'un moyen de couvercle nécessite l'emploi des moyens mécaniques souvent compliqués qui présentent, par ailleurs, des faiblesses lors d'une utilisation quotidienne et prolongée pendant plusieurs années.

La présente invention a notamment pour but de palier aux inconvénients de l'art connu, et notamment ceux cités ci-dessus, et a également pour but de proposer un dispositif d'affichage à vision à tête haute ayant un élément de réflexion et un moyen de couvercle permettant de couvrir l'élément de réflexion dans une première position de repos, le dispositif d'affichage comprenant un mécanisme ayant une grande stabilité et une durée de vie prolongé malgré une utilisation fréquente.

Suivant la présente invention, ce but est atteint par un dispositif d'affichage selon la revendication 1.

De par une telle réalisation d'un dispositif d'affichage, il est avantageusement possible de réaliser le mécanisme de mouvement de l'élément de réflexion et du moyen de couvercle de manière simple et stable.

Selon l'invention, le dispositif d'affichage comprend un moyen de couvercle de l'élément de réflexion, le moyen de couvercle couvrant l'élément de réflexion lorsque celui-ci est positionné dans sa première position de repos.

De par une telle réalisation d'un dispositif d'affichage, il est avantageusement possible d'éliminer ou au moins de réduire le risque d'endommagement de l'élément de réflexion lors celui-ci est dans sa première position de repos.

Selon l'invention, le moyen de couvercle est susceptible d'être déplacé entre une troisième position fermée et une quatrième position ouverte, la troisième position fermée correspondant au moyen de couvercle couvrant l'élément de réflexion, et lors du déplacement du moyen de couvercle entre sa troisième position fermée et sa quatrième position ouverte, le moyen de couvercle est soumis à un mouvement rotatif autour d'un autre axe de rotation fixe.

De par une telle réalisation d'un dispositif d'affichage, il est avantageusement possible de prévoir le mouvement du moyen de couvercle également de façon simple et mécaniquement stable.

Selon l'invention, une cinquième position du moyen de couvercle correspond à une position intermédiaire entre sa troisième position fermée et sa quatrième position ouverte, que le mouvement rotatif de l'élément de réflexion entre sa première position de repos et sa deuxième position d'affichage et le mouvement rotatif du moyen de couvercle entre sa troisième position fermée et sa cinquième position est prévu de manière simultanée, et que lors du mouvement rotatif du moyen de couvercle entre sa cinquième position et sa quatrième position ouverte l'élément de réflexion est prévu dans sa deuxième position d'affichage.

De par une telle réalisation d'un dispositif d'affichage, il est avantageusement possible de faciliter l'entrainement de l'élément de réflexion et du moyens de couvercle de façon à prévoir un seul moyen de moteur pour réaliser le mouvement de changement de position.

D'après une variante, il est aussi préféré que l'axe de rotation de l'élément de réflexion et l'autre axe de rotation du moyen de couvercle sont des axes physiques.

Selon l'invention, au moins l'axe de rotation de l'élément de réflexion ou l'autre axe de rotation du moyen de couvercle est une axe de rotation virtuelle, réalisé par l'intermédiaire d'une biellette.

De par une telle réalisation d'un dispositif d'affichage, il est avantageusement possible de prévoir une très bonne utilisation de l'espace prévu pour l'élément de réflexion et le moyen de couvercle.

Un perfectionnement préféré de l'invention réside dans le fait que l'axe de rotation de l'élément de réflexion et l'autre axe de rotation du moyen de couvercle sont identiques.

D'autres caractéristiques et avantages de l'invention ressortiront de la lecture de la description qui suit d'un mode de réalisation particulier non limitatif de la présente invention.

### BREVE DESCRIPTION DES DESSINS

L'invention sera mieux comprise grâce à la description ci-après, qui se rapporte à des modes de réalisation préférés, donnés à titre d'exemple non limitatifs et expliqués avec références aux dessins schématiques annexés, dans lesquels :
les figures 1 à 3 sont des vues schématiques de section d'un élément de réflexion d'un dispositif d'affichage selon une première variante de la présente invention, et
la figure 4 est une vue schématique de section d'un dispositif d'affichage selon la présente invention.

### DESCRIPTION DES DESSINS

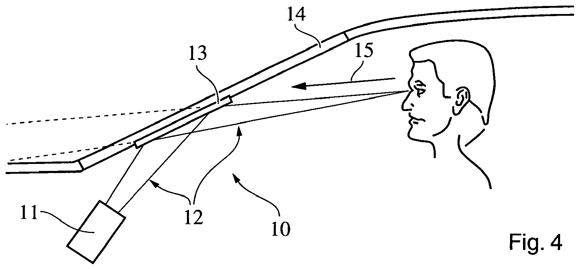

Comme le montre la figure 4 du dessin annexé, un dispositif d'affichage 10 selon la présente invention comprend un module de projection 11 qui génère une image dans la direction normale de regard 15 d'un utilisateur du dispositif d'affichage 10 selon un chemin optique 2.

Le chemin optique 2 comprend normalement au moins un élément de réflexion 13. De cette manière, le chemin optique 12 peut comprendre un élément (unique) de réflexion, comme représenté dans la figure 4. Par ailleurs, le chemin optique 2 peut aussi comprendre deux éléments de réflexion. Le dispositif d'affichage 10 peut aussi comprendre - dans une autre variante non représenté dans les figures - plus de deux éléments de réflexion 13.

La direction normale de regard 15 est la direction de vue d'un utilisateur du dispositif d'affichage 10, notamment un conducteur de véhicule, lorsque celui-ci regarde, notamment à travers un pare brise 14, l'extérieur qui se trouve devant le véhicule.

Selon la présente invention, l'élément de réflexion 13 est un élément positionné en écart par rapport au pare brise 14. L'élément de réflexion 13 peut être positionné dans une première position de repos e dans une deuxième position d'affichage. Lorsque l'élément de réflexion 13 est positionné dans sa première position de repos, l'élément de réflexion 13 est typiquement orienté de manière quasiment horizontale, et lorsque l'élément de réflexion 13 est positionné dans sa deuxième position d'affichage, l'élément de réflexion 13 est typiquement positionné debout ou quasiment verticalement de façon à ce que l'utilisateur du dispositif d'affichage puisse regarder à travers l'élément de réflexion 13.

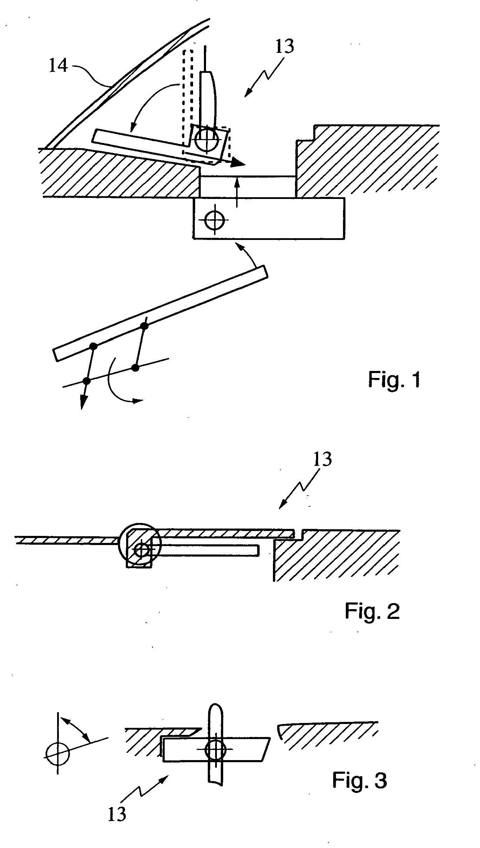

Selon la présente invention, l'élément de réflexion 13 - lors du déplacement de l'élément de réflexion 13 entre sa première position de repos et sa deuxième position d'affichage - est soumis à un mouvement rotatif autour d'un axe de rotation comme c'est représenté dans les figures 1 à 3.

De préférence, l'axe de rotation fixe est un axe de rotation physique comme c'est représenté dans les figures 1 et 2.

Dans un mode de réalisation alternatif de la présente invention, la rotation de l'élément de réflexion 13 est réalisée à travers une biellette comme c'est représenté dans la figure 3. De par une telle réalisation, un axe de rotation virtuelle est définie grâce à l'action commune de quatre leviers pour faire basculer l'élément de réflexion 13 entre sa position de repos et sa position d'affichage.

Selon un mode de réalisation préféré de l'invention, un moyen de couvercle est prévu pour couvrir l'élément de réflexion 13 lorsque celui-ci est positionné dans sa première position de repos. Dans une telle situation, le moyen de couvercle est positionné dans une troisième position fermée. Le moyen de couvercle est aussi soumis à un mouvement de rotation entre sa troisième position fermée et sa quatrième position ouverte. Ce mouvement de rotation est réalisé autour d'un autre axe de rotation (par rapport à l'axe de rotation de l'élément de réflexion 13).

Lorsque l'élément de réflexion 13 est positionné dans sa deuxième position d'affichage, le moyen de couvercle doit être positionné dans une quatrième position ouverte. Dans la figure 2, le moyen de couvercle est représenté dans sa quatrième position ouverte (représenté avec une ligne continue dans la figure 2). Entre une cinquième position du moyen de couvercle (représenté par une ligne pointillée dans la figure 2) et la quatrième position du moyen de couvercle, celui-ci peut être tourné autour de l'autre axe de rotation tandis que l'élément de réflexion 13 reste positionné dans sa deuxième position d'affichage. Le mouvement d'ouverture de l'ensemble de l'élément de réflexion 13 et du moyen de couvercle peut donc être séparé en une première phase de mouvement commun de rotation autour de l'axe de rotation et autour de l'autre axe de rotation, et une deuxième phase de mouvement du moyen de couvercle seulement, le mouvement l'élément de réflexion 13 étant arrêté par une butée. Ainsi, l'ensemble du mouvement du moyen de couvercle et de l'élément de réflexion 13 peut être entrainé par un moyen de moteur commun.

### Liste des références

- 10: dispositif d'affichage
- 11: module de projection
- 12: chemin optique
- 13: élément de réflexion
- 14: pare brise
- 15: direction normale de regard

## Revendications

1. Dispositif d'affichage (10), notamment pour véhicule automobile, comprenant un module de projection (11) pour générer une image en vue d'une projection dans la direction normale de regard (15) d'un utilisateur du dispositif d'affichage (10) selon un chemin optique (12), le dispositif d'affichage (10) comprenant un élément de réflexion (13) étant susceptible d'être déplacé entre une première position de repos et une deuxième position d'affichage, l'élément de réflexion (13) dans sa position d'affichage étant prévu dans la direction normale de regard (15) de l'utilisateur, lors du déplacement de l'élément de réflexion (13) entre sa première position de repos et sa deuxième position d'affichage, l'élément de réflexion (13) étant soumis à un mouvement rotatif autour d'un axe de rotation fixe, le dispositif d'affichage (10) comprenant un moyen de couvercle de l'élément de réflexion (13), le moyen de couvercle couvrant l'élément de réflexion (13) lorsque celui-ci est positionné dans sa première position de repos, le moyen de couvercle étant susceptible d'être déplacé entre une troisième position fermée et une quatrième position ouverte, la troisième position fermée correspondant au moyen de couvercle couvrant l'élément de réflexion (13), et lors du déplacement du moyen de couvercle entre sa troisième position fermée et sa quatrième position ouverte, le moyen de couvercle est soumis à un mouvement rotatif autour d'un autre axe de rotation fixe, une cinquième position du moyen de couvercle correspondant à une position intermédiaire entre sa troisième position fermée et sa quatrième position ouverte, dans lequel le mouvement rotatif de l'élément de réflexion (13) entre sa première position de repos et sa deuxième position d'affichage et le mouvement rotatif du moyen de couvercle entre sa troisième position fermée et sa cinquième position sont prévus de manière simultanée, et que lors du mouvement rotatif du moyen de couvercle entre sa cinquième position et sa quatrième position ouverte l'élément de réflexion (13) est maintenu dans sa deuxième position d'affichage, **caractérisé en ce qu'**au moins l'axe de rotation de l'élément de réflexion (13) ou l'autre axe de rotation du moyen de couvercle est un axe de rotation virtuel, réalisé par l'intermédiaire d'une biellette, l'axe de rotation virtuel étant défini grâce à l'action commune de quatre leviers pour faire basculer l'élément de réflexion (13) entre sa première position de repos et sa deuxième position d'affichage.

2. Dispositif d'affichage (10) selon la revendication 1, **caractérisé en ce que** l'axe de rotation de l'élément de réflexion (13) et l'autre axe de rotation du moyen de couvercle sont identiques.

## Patentansprüche

1. Anzeigevorrichtung (10), insbesondere für ein Kraftfahrzeug, umfassend ein Projektionsmodul (11) zum Erzeugen eines Bildes zur Projektion in der normalen Blickrichtung (15) eines Benutzers der Anzeigevorrichtung (10) gemäß einem Strahlengang (12), wobei die Anzeigevorrichtung (10) ein Reflexionselement (13) umfasst, das zwischen einer ersten Ruhestellung und einer zweiten Anzeigestellung bewegbar ist, wobei das Reflexionselement (13) in seiner Anzeigestellung in der normalen Blickrichtung (15) des Benutzers vorgesehen ist, wobei das Reflexionselement (13) während der Bewegung des Reflexionselements (13) zwischen seiner ersten Ruhestellung und seiner zweiten Anzeigestellung eine Drehbewegung um eine feste Drehachse durchläuft, wobei die Anzeigevorrichtung (10) ein Abdeckungsmittel für das Reflexionselement (13) umfasst, wobei das Abdeckungsmittel das Reflexionselement (13) abdeckt, während es in seiner ersten Ruhestellung positioniert ist, wobei das Abdeckungsmittel zwischen einer dritten geschlossenen Stellung und einer vierten geöffneten Stellung bewegbar ist, wobei die dritte geschlossene Stellung dem entspricht, dass das Abdeckungsmittel das Reflexionselement (13) abdeckt, und wobei das Abdeckungsmittel während der Bewegung des Abdeckungsmittels zwischen seiner dritten geschlossenen Stellung und seiner vierten geöffneten Stellung eine Drehbewegung um eine andere feste Drehachse durchläuft, wobei eine fünfte Stellung des Abdeckungsmittels einer Zwischenstellung zwischen seiner dritten geschlossenen Stellung und seiner vierten geöffneten Stellung entspricht, in der die Drehbewegung des Reflexionselements (13) zwischen seiner ersten Ruhestellung und seiner zweiten Anzeigestellung und die Drehbewegung des Abdeckungsmittels zwischen seiner dritten geschlossenen Stellung und seiner fünften Stellung auf gleichzeitige Weise vorgesehen sind, und wobei während der Drehbewegung des Abdeckungsmittels zwischen seiner fünften Stellung und seiner vierten geöffneten Stellung das Reflexionselement (13) in seiner zweiten Anzeigestellung gehalten wird,
**dadurch gekennzeichnet, dass** zumindest die Drehachse des Reflexionselements (13) oder die andere Drehachse des Abdeckungsmittels eine virtuelle Drehachse ist, die durch eine Verbindungsstange umgesetzt ist, wobei die virtuelle Drehachse durch das Zusammenwirken von vier Hebeln definiert ist, um das Reflexionselement (13) zwischen seiner ersten Ruhestellung und seiner zweiten Anzeigestellung zu schalten.

2. Anzeigevorrichtung (10) nach Anspruch 1, **dadurch gekennzeichnet, dass** die Drehachse des Reflexionselements (13) und die andere Drehachse des Abdeckungsmittels identisch sind.

## Claims

1. A display device (10), in particular for an automobile, comprising a projection module (11) to generate an image for projection in the normal line of sight (15) of a user of said display device (10) along an optical path (12), said display device (10) comprising a reflecting element (13) that is movable between a first resting position and a second display position, said reflecting element (13) being provided in the normal line of sight (15) of said user, wherein upon movement of said reflecting element (13) between its first resting position and its second display position, the reflecting element (13) undergoes a rotation around a fixed rotational axis, the display device (10) comprising a cover of the reflecting element (13), wherein said cover covers the reflecting element (13) upon being positioned in its first resting position, the cover being movable between a third closed position and a fourth open position, the third closed position corresponding to the cover covering the reflecting element (13), and wherein upon movement of the cover between its third closed position and its fourth open position, the cover undergoes a rotation around another fixed rotational axis, a fifth position of the cover corresponding to an intermediary position between its third closed position and its fourth open position, wherein the rotation of the reflecting element (13) between its first resting position and its second display position and the rotation of the cover between its third closed position and its fifth position are provided simultaneously, and wherein upon rotation of the cover between its fifth position and its fourth open position, the reflecting element (13) is kept in its second display position,
**characterised in that** at least the rotational axis of the reflecting element (13) or the other rotational axis of the cover is a virtual rotational axis, implemented by means of a connecting rod, said virtual rotational axis being defined by the joint action of four levers making the reflecting element (13) tilt between its first resting position and its second display position.

2. The display device (10) of claim 1, **characterised in that** the rotational axis of the reflecting element (13) and the other rotational axis of the cover are identical.
